# EUROPEAN PATENT APPLICATION

(11) **EP 4 047 815 A1**
(43) Date of publication of application: **24.08.2022**
(21) Application number: 21158308.3
(22) Date of filing: 19.02.2021
(51) Int. Cl.: H02S 20/00

(54) **PONTOON FOR A SOLAR ENERGY SYSTEM, USE OF A PONTOON, AND METHOD OF MANUFACTURING A PONTOON**

(71) Applicant: Texel4Trading B.V., 1795 AG De Cocksdorp (NL)
(72) Inventor: Schermer, Nicolaas Johannes Wilhelmina Hendrikus, 1791 GA Den Burg (NL)
(74) Representative: van Dam, Dirkjan Bernhard

(57) **Abstract**

Pontoon (10) arranged to be included by a solar energy system that is provided with at least one solar panel. The solar energy system is arranged to float on a water surface by means of at least the pontoon (10). The pontoon (10) includes a structural element (14) and a float (16). The structural element (14) has a composition so that the structural element (14) as such does not float on said water surface. The float (16) has a composition so that the float (16) as such does float on said water surface. The structural element (14) is provided with a cavity (20) wherein at least part of the float (16) is provided. The structural element (14) includes a solidified material that originates from a fluidic material that flowed above and/or besides the float (16) so that the solidified material extends above and/or besides the cavity (20).

## Description

### TECHNICAL FIELD

The invention relates to a pontoon that is arranged to be included by a solar energy system. The invention also relates to use of a pontoon in a floating solar energy system. The invention further relates to a method of manufacturing a pontoon that is arranged to be included by a solar energy system.

### BACKGROUND

Solar energy systems can be used for generation of electrical energy from solar radiation. During the last decade, solar energy systems have grown in popularity and are used in increasing amounts. Solar energy systems can for example be placed on roofs of buildings. However, the production of electrical energy by means of solar energy panels placed on roofs of buildings can be hindered by neighbouring objects, such as e.g. a neighbouring building.

Solar energy systems can nowadays also be employed on water surfaces like a surface of, e.g., a pond, lake, river, or sea. Such a solar energy system is usually not, or at least less, hindered by neighbouring objects such as buildings. The solar energy system used on a water surface may be floating. In this way, solar energy may be generated efficiently. Moreover, a surface coverage by solar panels of the solar energy system can be relatively high over a relatively large area.

Solar energy systems floating on water however introduce specific difficulties, in particular where it concerns pontoons of such systems. For example, wind, waves, and water current could destabilize pontoons of a floating solar energy system, which may cause damage to the solar energy system. Moreover, wind, waves, water current, and also UV-radiation and the water itself, can cause wear of the floating solar energy system. In particular when a solar energy system is floating on a salt water surface such as a sea water surface, such wear can be significant.

Wear of a solar energy system, in particular of pontoons of a solar energy system, introduces an enhanced risk of failure of a solar energy system. Such failure may for example be caused by break down of parts of the solar energy system or even by sinking of the solar energy system or parts thereof, such as a pontoon. Costs of repair or replacement of parts of floating solar energy systems can be significant. Moreover, a breakdown in energy generation may be damaging to persons and companies that rely on the generated energy. During repair or replacement, at least part of the solar energy system may not be able to generate electrical energy.

A floating solar energy system for example is known from US 2017/0040926 A1. Such a system however comprises many different parts and may be regarded vulnerable to wear. The importance of the durability of solar energy systems, in particular of pontoons of solar energy systems, is not yet fully recognised. After all, the application of such systems is relatively young and the scale of application is still growing. This is especially true for large off-shore floating solar energy systems, applied on sea. Thus, there is a need for a floating solar energy system, in particular for a pontoon of a floating energy system, that has an improved durability.

### SUMMARY

The invention provides a pontoon that is arranged to be included by a solar energy system that is provided with at least one solar panel and is arranged to float on a water surface, e.g. a water surface of a pond, lake, river, and/or sea, by means of at least the pontoon, wherein the pontoon includes a structural element and a float, the structural element having a composition so that the structural element as such does not float on said water surface and the float having a composition so that the float as such does float on said water surface, wherein preferably, in use, at least part of the structural element is positioned above the float or a part thereof. According to an aspect, the structural element is provided with a cavity wherein at least part of the float is provided. According to another aspect, the structural element includes a solidified material that originates from a fluidic material. Preferably, the fluidic material flowed above and/or besides the float so that the solidified material extends, preferably continuously, above and/or besides the cavity.

Combining a structural element having a non-floating composition and a float having a floating composition enables a relatively strong and durable pontoon that is still able to float. A solidified material included by the structural element may e.g. be concrete. Preferably, the structural element is moulded. The concrete preferably is reinforced by a solid structure, e.g. made of steel. Floating materials included by the float may e.g. be expanded polystyrene or another type of solid foam material. The cavity enables providing a protected space wherein at least part of the float can be accommodated. As the float, due to its composition, may be more vulnerable to wear, or other types of damage, than the structural element, the cavity enables a relatively durable pontoon wherein at least part of the float can be protected. Having continuity in at least part of the structural element enables an increased strength of the structural element. Moreover, manufacturing of the structural element by making the material flow above and/or besides at least part of the float, may enable an efficient integration of the float and the structural element into the pontoon. This may for example prevent or reduce mechanical handling of the float and/or of the structural element during manufacturing of the pontoon, in order to have the float provided, at least partly, in the cavity.

Preferably, the fluidic material is poured over and/or around at least part of the float, so that the material flows above and/or besides the float. The fluidic material preferably is a concrete suspension, in particular an aerated concrete suspension that has not yet solidified. Thus, preferably, the composition of the structural element includes a solidified fluidic material such as a solidified aerated concrete suspension. Preferably, by making the fluidic material flow above and/or besides the float, preferably by pouring the material over and/or around the float, the cavity is formed after solidification of the fluidic material.

In an embodiment, the float is attached to the structural element and, preferably, provided in the cavity. Preferably, such attachment is a result of solidification of the fluidic material. Preferably, the float is provided with at least one float coupling element for attachment of the float to the structural element. Preferably, the at least one float coupling element is, at least partly, surrounded by the solidified material as a result of the flow of the fluidic material. Preferably, the at least one float coupling element broadens in a direction away from the float. The at least one float coupling element may be attached to the float, e.g. by screwing.

In an embodiment, the solidified material surrounds at least part of a solid structure. Preferably, the solid structure is, at least partly, surrounded by the solidified material as a result of the flow of the fluidic material. Preferably, the fluidic material flowed into a mould wherein the solid structure and/or the float are, at least partly, provided. Preferably, the structural element includes a solidified material, such as a solidified suspension, that was poured over and/or around at least part of the float, and over and/or around at least part of the solid structure.

Preferably, one or more coupling elements are attached to the solid structure, for enabling a mechanical coupling to the structural element by means of the one or more coupling elements. After the attaching, at least part of the fluidic material may flow above and/or besides the float, and preferably into the mould, to surround the coupling elements. This may enable durability of the attachment between the one or more coupling elements and the structural element.

Preferably, the float is attached to the solid structure, preferably by means of the one or more float coupling elements. The float and the solid structure are preferably attached to each other before at least part of the fluidic material flowed above and/or besides the float. After the attaching, the at least part of the fluidic material may flow, preferably into the mould, above and/or besides the float. This may enable durability of the attachment between the float and the structural element.

In an embodiment, the structural element includes an, in use, sidewardly extending upper part and an, in use, downwardly projecting lower part that projects downwards from the upper part. Preferably, the sidewardly extending upper part and the downwardly projecting lower part define the cavity. The downwardly projecting lower part may form a barrier against damage of the float. Preferably, the sidewardly extending part and the downwardly projecting part are made of one piece. In particular if a concrete suspension is used for manufacturing the structural element, making both parts of one piece facilitates the manufacturing process in combination with obtaining a durable pontoon.

In an embodiment, the structural element has an, in use, lower surface, wherein the downwardly projecting lower part defines at least part of the lower surface of the structural element. Preferably, the downwardly projecting lower part forms an, in use, lowest point of the structural element. This may increase durability of the pontoon, as it may reduce a number of parts of the pontoon.

In an embodiment, the structural element has an outer circumference that is defined by side surfaces of the structural element, wherein the downwardly projecting lower part is positioned near the outer circumference of the structural element. Positioning the downwardly projecting lower part near the outer circumference, enables a relatively large lateral extend of the float. As a result, the pontoon can be relatively stable.

In an embodiment, the cavity provided in the structural element is open in an, in use, downwards direction. This may facilitate manufacturing of the structural element by, e.g., pouring the material in the mould. Moreover, this may facilitate providing, in particular positioning, the float into the cavity, e.g. after repair of the float. In an embodiment, the float may be moved out of the cavity, preferably in a downwards direction, or into the cavity, preferably in an upwards direction.

In an embodiment, the composition and a volume of the structural element and of the float are designed so that, in use and while the water surface is substantially free of waves and preferably is substantially free of current, the downwardly projecting lower part is at least partly below the water surface. This enables improving protection of the float against surface waves on the water surface.

In an embodiment, the composition and a volume of the structural element and of the float are designed so that, in use and while the water surface is substantially free of waves and preferably is substantially free of current, a majority of the downwardly projecting lower part is above the water surface. Having most of the downwardly projecting surface above the water surface, enables a relatively light pontoon. Optionally, the float partly projects out of the cavity.

In another embodiment, the composition and a volume of the structural element and of the float are designed so that, in use and while the water surface is substantially free of waves and preferably is substantially free of current, a majority of the downwardly projecting lower part is below the water surface. This enables a relative good protection of the float. Optionally, the float does not project out of the cavity, i.e. is contained inside the cavity.

In an embodiment, the composition and dimensions, of the structural element and of the float, are designed so that, in use and while the water surface is substantially free of waves and preferably is substantially free of current, a center of gravity of the pontoon and/or of the solar energy system is above the water surface, and/or is at most 20% of a lateral dimension of the float above the water surface. Having a center of gravity of the pontoon above the water surface is surprising, as durable floating objects like boats usually have their center of gravity below the water surface. Stability of the pontoon against wind, waves, and current may benefit from an upper limit of the center of gravity. Said lateral dimension of the float may e.g. be a length, width, or diameter of the float. Said lateral dimension may be measured along a horizontal direction, in use and while the water surface is substantially free of waves and preferably is substantially free of current.

In an embodiment, the composition and dimensions, of the structural element and of the float, are designed so that, in use, a natural oscillation time of the pontoon and/or of the solar energy system is at least 10 seconds, preferably at least 15 seconds, more preferably about 20 seconds. Stability of the pontoon against wind, waves, and current may benefit from a lower limit to the natural oscillation time of the pontoon. Said lower limit may be larger than naturally occurring oscillation times of waves, current and/or wind that may disturb the water surface during use of the solar energy system.

In an embodiment, the solidified material is formed at least partly by concrete. The structural element includes e.g. at least 50 wt. % concrete- or at least 70 wt. % concrete. Preferably, the composition of the structural element includes at least 80 wt. % concrete, more preferably at least 90 wt. % concrete or at least 95 wt. % concrete. The structural element may e.g. be substantially made of concrete.

In an embodiment, the float includes at least 70 wt. % expanded polystyrene. Preferably, the float includes at least 80 wt. % expanded polystyrene, more preferably at least 90 wt. % expanded polystyrene or at least 95 wt. % expanded polystyrene. The float may e.g. be substantially made of expanded polystyrene.

In an embodiment, the concrete includes parts of recycled solar panels. Preferably, the concrete includes at least 10 wt. %, more preferably at least 20 wt. % and/or at most 30 wt. %, of parts of recycled solar panels. Recycling solar panels by reusing them as part of the concrete, may provide an environmental advantage.

In an embodiment, the float is, at least partly, covered by a protective layer. The protective layer may e.g. be an anti-rooting membrane. Other protective layers can be used, alternative to, or in addition to, the anti-rooting membrane. The protective layer may be substantially free of plastic, e.g. may be based on burlap and/or hemp. By means of the protective layer, the float may be further protected against wear. The anti-rooting membrane may e.g. protect the float against plants that may grow on a surface of the float. Such plants may enhance wear of the float. Thus, the protective layer may improve a durability of the pontoon and of the solar energy system.

Preferably, the solar energy system includes the pontoon. In an embodiment, the solar energy system includes a frame that is attached to the structural element, the frame being arranged for attaching the at least one solar panel to the frame and, optionally, positioning the solar panel above the structural element. The frame preferably includes a plurality of frame elements. Preferably, the at least one solar panel is attached to the frame. Preferably, a pair of solar panels is attached to a pair of frame elements.

In an embodiment, the pontoon is included by the solar energy system. Preferably, the at least one solar panel is attached to the frame by means of at least one moveable, e.g. slidable, lock that allows movement of the at least one solar panel and the frame with respect to each other. A moveable lock enables reduction of forces on, and mechanical stress in, the at least one solar panel. A fully rigid attachment between the frame at the at least one solar panel could induce mechanical loads on the solar panel, e.g. due to deformation in the frame and/or the at least one solar panel caused by wind, waves, and/or differences in thermal expansion between the frame and the solar panel. Hence, a durability of the at least one solar panel may benefit from a loose connection between the at least one solar panel and the frame.

Preferably the solar energy system includes, per solar panel, one fixing lock between the solar panel and the frame, which does not allow movement of the solar panel and the frame with respect to each other. The attachment of the frame and the solar panel relative to each other may benefit from such a fixing lock, as it may e.g. substantially prevent the at least one solar panel from substantial impact against the frame.

In an embodiment, the pontoon is one of a plurality of pontoons included by the solar energy system, wherein pontoons of the plurality of pontoons are preferably mechanically interconnected. Thus, in an embodiment, the solar energy system includes a plurality of the pontoons. Preferably, the plurality of pontoons are mechanically interconnected, e.g. by means of interconnection elements. Such interconnection elements may be coupled to one or more of the coupling elements that are attached to the solid structures of the pontoons, for enabling a mechanical coupling to the structural element by means of the one or more coupling elements.

In an embodiment, the structural element has a substantially rectangular shape in an, in use, horizontal cross section. A proportion between a long side and a short side of the rectangular shape may e.g. be at least 2 and/or at most 4, preferably at least 2.5 and/or at most 3, preferably about 2.7. Such a rectangular shape may enable an efficient configuration of a solar energy system than includes a plurality of pontoons. Preferably, the pontoons of said plurality of pontoons are mechanically interconnected near a corner of the pontoons.

In an embodiment, adjacent pontoons of the plurality of pontoons along an array of pontoons, are spaced apart in a direction along the array. Preferably, the pontoons are interconnected by frame elements to which the at least one solar panel is attached.

In an embodiment, adjacent pontoons of the solar energy system are spaced apart along an array of solar energy systems, and are interconnected by a frame to which at least one solar panel is attached. Preferably, the solar energy system is used for generating electrical energy from solar radiation. Preferably, a plurality of solar panels of the solar energy system are electrically connected, for producing the electrical energy.

The invention further provides use of the pontoon in a floating solar energy system, the pontoon being one of a plurality of, preferably similar, pontoons included by the solar energy system. Preferably, the pontoons of the plurality of pontoons are mechanically interconnected.

The invention also provides use of a solar energy system, preferably a solar energy system described in the present disclosure, for generating electrical energy from solar radiation, the solar energy system including a pontoon provided with at least one solar panel, wherein the pontoon includes a structural element and a float, the use including: providing the solar energy system floating on a water surface, such as a water surface of, e.g., a pond, lake, river, or sea, by means of at least the pontoon; providing the structural element with a composition so that the structural element as such does not float on said water surface; providing the float with a composition so that the float as such does float on said water surface; and preferably positioning at least part of the structural element above at least part of the float. According to an aspect, at least part of the float is provided in a cavity provided in the structural element. According to another aspect, the structural element includes a solidified material that originates from a fluidic material, such as a suspension. Preferably, the fluidic material flowed above and/or besides the float so that the solidified material extends, preferably continuously, above and/or besides the cavity. According to a further aspect, the structural element includes a solidified material that originates from a fluidic material, such as a suspension, that was poured over and/or around at least part of the float.

The invention further provides a method of manufacturing a pontoon that is arranged to be included by a solar energy system that is provided with at least one solar panel and is arranged to float on a water surface, e.g. a water surface of a pond, lake, river, and/or sea, by means of at least the pontoon, the method including: manufacturing of a structural element that has a composition so that the structural element as such does not float on said water surface; providing a float that has a composition so that the float as such does float on said water surface. According to an aspect, the method includes providing the float at least partly in a cavity that is provided in the structural element, preferably so that at least part of the structural element can be positioned above the float or a part thereof. According to another aspect, manufacturing of the structural element includes making a fluidic material flow above and/or besides the float and includes solidification of the fluidic material, so that at least part of the solidified material extends, preferably continuously, above and/or besides the cavity. According to a further aspect manufacturing of the structural element includes pouring the fluidic material over and/or around at least part of the float so that the material flows above and/or besides the float.

The cavity may provide for a protected space wherein at least part of the float can be accommodated. Thus, advantages of the combination of a float and an, on itself non-floating, structural element may be used in a durable pontoon. Having continuity in the structural element enables an increased strength of the structural element. Moreover, manufacturing of the structural element by making the material flow above and/or besides at least part of the float, preferably by pouring the fluidic material, may enable an efficient integration of the float and the structural element in the pontoon. Thus, the method may in particular be suitable for mass production of pontoons, e.g. for a solar energy system that includes at least a thousand, or at least five thousand or at least ten thousand, pontoons.

Preferably, a shape and/or one or more dimensions of the cavity are defined by the float during the manufacturing of the structural element. Preferably, by making the fluidic material flow above and/or besides the float, the cavity is formed by the solidification of the fluidic material. Preferably, the fluidic material solidified besides and preferably above the float, to form the cavity. The structural element preferably includes the solidified material. The solidified material may originate from the fluidic material.

In an embodiment, the method includes manufacturing the structural element by means of at least a concrete suspension. For example, the structural element includes at least 50 wt. % or at least 70 wt. % concrete, in particular at least 50 wt. % or at least 70 wt. % aerated concrete.

In an embodiment, providing the float includes manufacturing the float by means of at least expanded polystyrene. Preferably, the structural element includes at least 70 wt. % expanded polystyrene. In an embodiment, providing the structural element includes manufacturing the structural element by means of parts of recycled solar panels.

The fluidic material may e.g. be a suspension such as a concrete suspension. By pouring the fluidic material over and/or around the float, preferably the cavity is formed by solidification of the poured material.

The method preferably includes providing a mould for manufacturing the structural element. In an embodiment, the method includes: positioning at least part of the float in and/or surrounded by a mould; and making the fluidic material flow into the mould so that the material flows above and/or besides the float. Preferably, the solidified fluidic material forms at least part of the composition of the structural element. Preferably, the float and/or the mould, in particular an inner space of the mould, defines a shape and/or one or more dimensions of the structural element, for example of the cavity of the structural element, of a sidewardly extending upper part of the structural element, and/or of a downwardly projecting part of the structural element. The float preferably defines a shape and/or one or more dimensions of the cavity.

Preferably, making the fluidic material flow into the mould may include pouring the material into the mould. Preferably, the method includes pouring the material in the mould for manufacturing the structural element.

Preferably, the mould used for manufacturing the structural element is oriented so that, after manufacturing the structural element, the cavity is open in an, in use, downward direction. Such orientation is surprising, as it prevents access to the cavity, or at least makes such access more difficult. By forming the cavity on and around the float by making the fluidic material flow above and/or besides the float, preferably by pouring the fluidic material into the mould, the float is provided at least partly in the cavity without having to move the structural element and/or the float relative to each other. Thus, a need for access to the cavity for providing the float as least partly in the cavity, may be prevented.

In an embodiment, manufacturing the structural element includes: positioning at least part of the float in and/or surrounded by the mould; and subsequently, pouring the fluidic material into the mould. Preferably, after solidification, the solidified fluidic material forms at least part of the composition of the structural element. Preferably, the float extends downwardly out of the cavity defined by the poured concrete.

In an embodiment, the method includes: positioning a solid structure in the mould, preferably before making at least part of the fluidic material flow into the mould; wherein the solid structure is, at least partly, surrounded by the fluidic material as a result of the flow of the fluidic material into the mould. Preferably, the solid structure extends in, more preferably substantially through, the mould. Preferably, after manufacturing the structural element, the solid structure reinforces the structural element. Optionally, the solid structure includes a metallic material such as steel, e.g. may be made of a metallic material such as steel. Preferably, the structural element includes reinforced concrete.

In an embodiment, the method includes: before making at least part of the fluidic material flow into the mould, attaching one or more coupling elements to the solid structure, for enabling a mechanical coupling to the structural element by means of the one or more coupling elements. After the attaching, the at least part of the material may flow into the mould to surround the coupling elements. This may enable durability of the attachment between the one ore more coupling elements and the structural element.

A coupling element preferably includes a tube with internal threading, such as a screw sleeve. The one or more coupling elements preferably are contained inside an outer envelop of the structural element, i.e. do not project out of the structural element. The one or more coupling element may be arranged for receiving a threaded connecting bolt or screw, e.g. to connect an eye coupling attached to the connecting bolt or screw, or to connect an interconnection element to the pontoon that can be used to connect the pontoon to another pontoon. The connecting bolt or screw may include stainless steel, and preferably is made substantially of stainless steel. Using coupling elements of pontoons, pontoons of a plurality of pontoons can be mechanically interconnected by means of interconnection elements.

In an embodiment, the method includes: attaching the float to the solid structure, preferably before making at least part of the fluidic material flow into the mould, in particular before pouring at least part of the fluidic material. Preferably, attachment elements are attached to the float before making at least part of the fluidic material flow into the mould, in particular before pouring at least part of the material. Preferably, the solid structure is attached to the attachment elements. After the attachment, the at least part of said material may flow into the mould to surround the attachment elements. This may enable durability of the attachment between the float and the structural element.

In an embodiment, the method includes providing a protective layer around at least part of the float, preferably after providing the float in the mould. The protective layer may e.g. comprise and anti-rooting membrane and/or a rubber layer. Preferably, the anti-rooting membrane may be covered by a rubber layer to form the protective layer. Preferably, the protective layer is positioned on the bottom of the mould and against an inner side of the mould. Preferably, the float is positioned on the protective layer that is positioned on the bottom of the mould.

In an embodiment, the method includes attaching a frame to the at least one solar panel and to the structural element, for positioning the at least one solar panel. Preferably, the frame is attached to the structural element after interconnecting the structural element to a structural element of another pontoon.

Preferably, manufacturing the solar energy system is carried out without including plastic materials in the solar energy system. Optionally, manufacturing the solar energy system is carried out with including at most 10 wt. %, preferably at most 5 wt. %, more preferably at most 1 wt. % of plastic materials in the solar energy system. Experiments have shows that plastic materials are relatively vulnerable, and may reduce a durability of the solar energy system.

Preferably, the method may include providing the structural element, said providing including the manufacturing of the structural element. Preferably, manufacturing the structural element is carried out without including plastic materials in the composition of the structural element. Optionally, manufacturing the structural element is carried out with including at most 10 wt. %, preferably at most 5 wt. %, more preferably at most 1 wt. %, of plastic materials in the structural element.

Preferably, providing the float includes manufacturing the float. Preferably, manufacturing the structural element is carried out without including plastic materials in the float. Optionally, manufacturing the float is carried out with including at most 10 wt. %, preferably at most 5 wt. %, more preferably at most 1 wt. % of plastic materials in the float.

In an embodiment, the method may include releasing the pontoon from the mould by lifting the pontoon. Preferably, after lifting, the pontoon is placed on a truck or trailer for transporting the pontoon, e.g. towards the water surface. Preferably, a plurality of pontoons are stacked in a vertically direction on the truck or trailer. Preferably, the plurality of pontoons is manufactured in a vicinity of the water surface, e.g. within 100 kilometer of the water surface or within 200 kilometer of the water surface.

### BRIEF DESCRIPTION OF THE DRAWINGS

The invention will be illustrated with reference to the following non-limiting figures, wherein:
Figure 1A shows, in an embodiment, a schematic perspective view of a floating solar energy system including a floating pontoon;
Figure 1B shows a schematic cross section of the pontoon of figure 1A, in a plane that is perpendicular to a side of the pontoon;
Figure 2A schematically illustrates, in an embodiment, a first step of manufacturing a pontoon;
Figure 2B schematically illustrates a second step of manufacturing a pontoon;
Figure 2C schematically illustrates a third step of manufacturing a pontoon;
Figure 3 shows, in an embodiment, steps of a method of manufacturing a solar energy system that includes a pontoon;
Figure 4A shows a schematic top view of an embodiment of a pontoon;
Figure 4B shows a detail of figure 4A;
Figure 4C shows a cross section indicated in figure 4B;
Figure 5A shows, in a schematic top view, a plurality of pontoons that are interconnected;
Figure 5B shows a detail of figure 5A, illustrating a mechanical connection between two pontoons;
Figure 5C shows, in a cross section indicated in figure 5B, a mechanical connection between two pontoons;
Figure 6A shows, in a schematic side view, an example of a frame element to which a solar panel is attached; and
Figure 6B shows a schematic top view of a part of an embodiment of a solar energy system.

### DETAILED DESCRIPTION

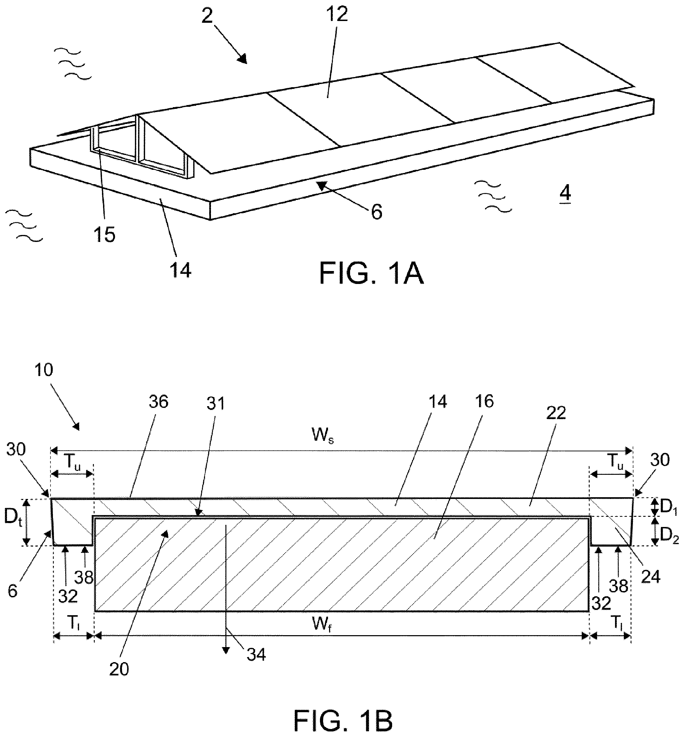

Figure 1A shows a schematic perspective view of a floating solar energy system 2, in an embodiment according to the invention. The solar energy system is provided with at least one solar panel 12. The solar energy system may be provided with a plurality of solar panels, e.g. with two rows of four solar panels 12 as illustrated in figure 1A. The solar energy system 2 is arranged to float on a water surface 4 of a pond, lake, river, and/or sea. A part of the solar energy system 2 that is below the water surface 4 on which the solar energy system 2 floats, is not visible in figure 1A.

Figure 1A further shows, in an embodiment according to the invention, a pontoon 10 that is included by the solar energy system 2. Figure 1B shows a schematic cross section of the pontoon 10, in a plane that is perpendicular to a long side 6 of the pontoon. The pontoon includes a structural element 14, to which the plurality of solar panels 12 may be attached by means of a plurality of frame elements 15. The frame elements 15 and the solar panels 12 may, in an embodiment of a method according to the invention, be provided to the pontoon while the pontoon is floating on the water surface.

As illustrated in figure 1A, the solar panels 12 may generally be positioned above (i.e., higher than and, when seen in a vertical direction, partly or completely overlapping with) at least part of the structural element 14 and/or the pontoon 10. Thus, the solar panels 12 may overlap with at least part of the structural element 14 and/or the pontoon 10, when seen from the vertical direction. The plurality of solar panels may include one or more pairs of solar panels that are positioned substantially in a V-shape, the V being upside down.

The structural element has a composition so that the structural element as such does not float on said water surface. Thus, a specific gravity of the structural element 14 may be larger than the specific gravity of the water forming said water surface 4. Generally, the density of the structural element may be at least 1500 kilogram per cubic meter or at least 2000 kilogram per cubic meter, e.g. about 2400 kilogram per cubic meter. The structural element 14 may provide strength and durability to the pontoon. As illustrated in figure 1A, the structural element may have a substantially rectangular shape in an, in use, horizontal cross section. Of course, other shapes are possible as well.

The pontoon further includes a float 16. The float 16 and the structural element 14 may, in use, be attached to each other. The float 16 has a composition so that the float 16 as such does float on the water surface 4. Thus, a specific gravity of the float may be smaller than the specific gravity of the water forming said water surface 4. Generally, the density of the float may be e.g. at most 100 kilogram per cubic meter or at most 50 kilogram per cubic meter. In use, the structural element 14 is positioned above at least part of the float 16. The at least one solar panel, e.g. a plurality of solar panels, may be positioned above at least part of the structural element 14 and above at least part of the float 16.

As is visible in figure 1B, the structural element 14 is provided with a cavity 20. The cavity may be shaped for receiving at least part of the float 16. In the example shown in figure 1B, the float 16 is provided partly in the cavity 20. Thus, the float 16 may project partly out of the cavity. Alternatively, the float may be provided completely in the cavity 20. The cavity 20 may be open in an, in use, downwards direction. The structural element may include an, in use, sidewardly extending upper part 22 and a lower part 24 that projects downwards from the upper part. The upper part 22 and the lower part 24 may together define the cavity 20. The structural element 14 may have an outer circumference 30. The outer circumference 30 may be defined by the side surfaces 6 of the structural element 14 of the pontoon 10.

The downwardly projecting lower part 24 may be positioned near the outer circumference 30 of the structural element 14. The downwardly projecting lower part 24 may extend along a part of, or along substantially the whole of, the circumference 30. The downwardly projecting lower part 24 may form a protective member, such as a wall, that completely circumvents the cavity 20. Alternatively, the downwardly projecting lower part 24 circumvents the cavity 20 partly, e.g. because openings are provided in the downwardly projecting lower part 24 that may reduce a weight of the pontoon. The downwardly projecting lower part 24 may protect the cavity 20 i.a. from current, waves, and ultraviolet radiation included by solar radiation (or, in other words, UV radiation). In the example of figure 1B, the downwardly projecting lower part 24 may provide such protection in particular to an upper portion of the float 16.

The structural element 14 may have an, in use, lower surface 32. The downwardly projecting lower part 24 may define at least part of the lower surface 32 of the structural element 14. At least part of the lower surface of the structural element 32 may be formed by a lower surface 38 of the downwardly projecting lower part 24. The cavity 20 provided in the structural element 16 may be open in an, in use, downward direction 34. In this way, a cavity can be provided that, in combination, provides significant protection to the float 16, is relatively easy to manufacture, and allows for convenient attachment of the float and the structural element to each other.

The structural element will, in use, provide a downward gravitational force on the pontoon. The float, when completely or partially submerged, will provide an upward force on the pontoon. The cavity, in combination with an, in use, upward force on the float and a downward force on the structural element, may already realize the attachment of both parts of the pontoon to each other, by substantially preventing sideward and downward motion of the float relative to the structural element 14. In addition, or alternatively, for example glue, screws, and/or other means of attachment may be used for attaching the float and the structural element to each other.

The composition and a volume of the structural element and of the float are designed so that that pontoon floats on the water surface. The pontoon floats on the water surface if it is partly above the water surface, when the water surface is still (i.e., substantially without waves and current). The composition and the volume of the structural element and of the float may be designed so that, in use and while the water surface 4 is substantially free of waves and preferably is substantially free of current, a majority of the downwardly projecting lower part is above the water surface. In general, in use the pontoon may be floating on the water surface, optionally being connected to one or more other pontoons, being provided with one or more solar panels, and/or being included in a solar energy system.

The downwardly projecting lower part 24 may have a height D₂. The sidewardly extending upper part 22 may have a height D₁. When floating on a still water surface, the downwardly projecting lower part may be above the water surface, or may be partly below the water surface. Preferably, in use of the solar energy system floating on a still water surface, the downwardly projecting lower part is below the water surface for at most 30 % of its height D₂, or for at most 10 % of its height D₂. Thus, the lower surface 38 of the downwardly projecting lower part 24 may be near the water surface, preferably above the water surface. Such a downwardly projecting part enables a relatively light pontoon, while still offering protection to the float.

In another embodiment, the composition and a volume of the structural element and of the float are designed so that, in use and while the water surface is substantially free of waves and preferably is substantially free of current (e.g. with a wave height smaller than 0.1 meter and preferably a current smaller than 0.1 meter per second), a majority of the downwardly projecting lower part is below the water surface. For example, the downwardly projecting lower part is below a still water surface for at least 50 % of its height D₂ and/or at most 80 % of its height D₂. This enables a relative good protection of the float. Optionally, the float does not project out of the cavity, i.e. is contained inside the cavity.

Generally, the composition and a volume, of both the structural element and the float, may be designed so that a top surface 31 of the float is above a still water surface level. This may reduce, or substantially prevent, water penetrating, via the cavity, directly into the sidewardly extending upper part 22. Moreover, it may be more difficult for water to reach means of attachment such as one or more float coupling elements, which may be used for attaching the float and the structural element to each other. This may increase a durability of the pontoon, in particular when floating on a salt water surface such as a sea water surface.

Typical dimensions of the structural element and the float of the pontoon 10 may be for example: a width Wₛ of the structural element at an upper surface 36 of the structural element, may be at least 2 meter and/or at most 3 meter, preferably about 2.4 meter; a width W_{f} of the float may be at least 1.5 meter and/or at most 2.5 meter, preferably about 2.0 meter; a width Tₗ of the downwardly projecting surface at a lower surface 38 of the downwardly projecting lower part may be at least 12 centimeter and/or at most 22 centimeter, preferably about 17 centimeter; and/or a sidewards extension Tᵤ of the upper part of the structural element beyond the float at an upper surface 36 of the structural element, may be at least 15 centimeter and/or at most 25 centimeter, preferably about 20 centimeter.

The downwardly projecting lower part 24 may be tapered in the downward direction 34. Thus, a width Tₗ of the downwardly projecting lower part at its lower surface 38 may be smaller than the sidewards extension Tᵤ of the upper part 22 of the structural element 14 beyond the float 16. Such dimensions may be chosen after experimentation and calculation, and enable a pontoon that is stable and enduring under challenging conditions such as relatively strong winds, deep and/or salt water, and intense UV-radiation from sunlight. The downwardly projecting lower part 24 may be shaped to define an, in use, overhanging side 6 of the structural element 14, as illustrated in figure 1B. Such an overhang may prevent, or at least discourage, harmful animals like rats to enter an upper surface 36 of the structural element 14. One or more thin ropes, such as fishing lines, may be provided above and/or near the one or more solar panels 12. This may enable preventing birds to sit on and/or near the one or more solar panels 12.

The dimensions and properties of the structural element 14 and of the float 16 may also be designed for realising favourable dynamic properties of the solar energy system, and in particular of the pontoon 10. For example, the composition and dimensions of the float and of the pontoon may be designed so that, in use, a natural oscillation time of the pontoon is at least 10 seconds, preferably ay least 15 seconds, e.g. about 20 seconds or at least 20 seconds. As another example, the composition and the volume of the structural element and of the float may be designed so that a center of gravity of the pontoon is above the water surface, preferably at a height H above a still water surface that is at least 0,1 meter and/or at most 0,5 meter, preferably at most 0,3 meter. A center of gravity that is too far above the water surface, is surprising in view of desired stability. A center of gravity that is too high, may lead to instability of the solar energy system and of the pontoon.

Additionally, or alternatively, a sidewards dimension of the float, such as a width W_{f} of the float, may be at least 1.5 meter, more preferably at least 2 meter. More in general, a ratio of the height H of the center of gravity of the center of the solar energy system above the still water surface, and a smallest lateral (i.e., in use substantial horizontal) dimension of the flat (e.g. the width W_{f}), may be at most 0.25, preferably at most 0.20, more preferably at most 0.15, e.g. about 0.10. Thus, the composition and dimensions, of the structural element and of the float, may be designed so that, in use and while the water surface is substantially free of waves and preferably is substantially free of current, a center of gravity of the pontoon is above the water surface, preferably is at most 20 % of a lateral dimension of the float above the water surface.

The structural element 14 may include a solidified material. The solidified material may originate from a fluidic material. Thus, the composition of the structural element 14 may include said solidified material. The fluidic material may have flowed above and/or besides the float. As a result, the solidified material may extend, preferably continuously, above and/or besides the cavity. Thus, at least part of the structural element 14 may continuously extend above and/or besides the float. A continuously extending part of the structural element may be substantially free of interfaces that are within said part of the structural element and can be freely separated and moved relative to each other and without damaging said part of the structural element. The sidewardly extending upper part 22 of the structural element 14, and the downwardly projection part 24 of the structural element 14, may be made substantially of one piece formed by the solidified fluidic material.

The fluidic material may be a suspension, for example a concrete suspension. Such a concrete suspension may include water, sand, and cement. The material may be poured over and around at least part of the float 16. Pouring may be carried out continuously during a time period, or may be carried out in batches. Pouring may include providing the fluidic material by means of a hose, flexible tube, rigid pipe, and/or other tubular member. A funnel may be provided at a downstream end of the tubular member. The tubular members and funnel as such may be conventional and are not drawn. After pouring, the fluidic material may solidify to form the structural element 14. Solidification may include e.g. drying of the fluidic material and/or chemical reaction of the fluidic material. Thus, the solidified material may originate from the fluidic material by drying of the fluidic material or by a chemical reaction of the fluidic material. The structural element 14 may be moulded. Moulding may include said pouring and solidification.

As a result of the solidification, the cavity 20 may be formed. For example, concrete may harden (i.e. solidify) on and around at least part of the float 16, to form the cavity 20. The solidified fluidic material may be formed at least partly by concrete, in such a way that the structural element includes at least 70 weight percent (herein also referred to as wt. %) concrete, preferably at least 90 wt. % concrete. A majority of a mass of the structural element and/or the pontoon may generally be made of concrete.

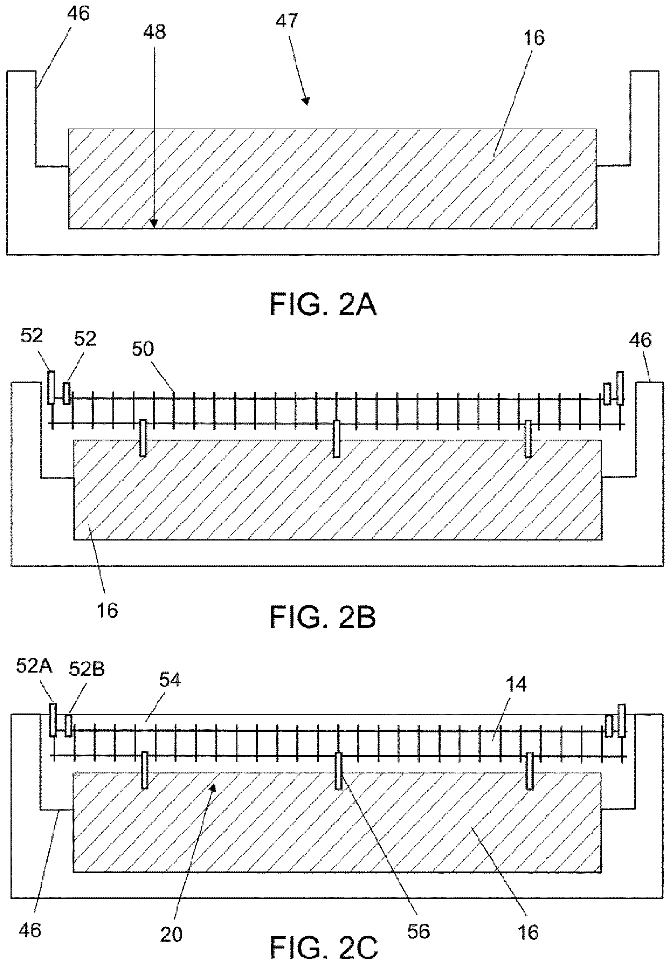

Figures 2A-2C schematically illustrate, in an embodiment of the invention, steps of a method of manufacturing a solar energy system. Figures 2A-2C schematically illustrate steps of manufacturing a pontoon 10, which is part of the solar energy system that may be arranged to float on a water surface of, for example, a pond, lake, river, and/or sea. Figure 2A illustrates a first step of manufacturing the pontoon. Figure 2B illustrates a second step of manufacturing the pontoon. Figure 2C illustrates a third step of manufacturing the pontoon. The second step may be carried out after the first step. The third step may be carried out after the second step.

The pontoon comprises a structural element 14 and a float 16. The structural element has a composition so that the structural element as such, i.e. the structural element itself, does not float on said water surface. The structural element 14 may include at least 70 wt. % solidified concrete, preferably at least 90 wt. % solidified concrete. The float has a composition so that the float as such, i.e. the float itself, does float on said water surface. The float may include at least 70 wt. % expanded polystyrene, preferably at least 90 wt. % expanded polystyrene. After manufacturing the pontoon, the pontoon may be provided with at least one solar panel, preferably with a plurality of solar panels (as illustrated e.g. in figure 1A).

As illustrated in the embodiment of figure 1B, the float is provided at least partly in a cavity 20 that is provided in the structural element 14. At least part of the structural element 14 can be positioned above the float 16 or a part thereof. The structural element 14, in particular its upper part 22, may e.g. be positioned on top of the float 16, as illustrated in figure 1B. Alternatively, the structural element may merely extend around the float, while, in use, a portion of the structural element may extend to a higher vertical position than the float. Hence, in some embodiments, the structural element and the float do not overlap when seen from the vertical direction.

The structural element may be moulded by means of a mould. Illustrated in figure 2A, manufacturing the pontoon may include positioning at least part of the float in and surrounded by a mould 46. The float 16 may e.g. be positioned on a bottom 48 of an inner space 47 of the mould 46. In other embodiments, the float 16 may project out of the bottom of the mould, so that the bottom of the mould surrounds the float. In such embodiments, the float may extend vertically to a lower position than the bottom of the inner space of the mould. The mould 46, in particular the inner space 47 thereof, may define a shape and/or one or more dimensions of the structural element 14, in particular of the cavity 20 of the structural element 14.

Manufacturing the pontoon may include making a fluidic material flow above and/or besides the float so that at least part of the solidified material extends above and/or besides the cavity. Flow of the fluidic material may be subsequent to positioning the float in and/or surrounded by the mould. Manufacturing may include pouring the fluidic material, preferably a concrete suspension, into the inner space 47 of the mould 46 for manufacturing the structural element 14. Preferably, the fluidic material is an aerated concrete suspension. Aerated concrete may reduce a weight of the structural element.

Illustrated in figure 2B, manufacturing the structural element may include positioning a solid structure 50 in the inner space 47 of the mould 46. The solid structure may be positioned at least partly above the float, preferably attached to the float. The solid structure 50 may e.g. be substantially made of steel. The solid structure may form a reinforcement of the structural element, or may at least form part of such reinforcement. Such use of the solid structure combines well with making the fluidic material flow above and/or besides the float so that at least part of the solidified material extends above and/or besides the cavity. As a result of the flow, the solid structure may be surrounded and thus well attached to the structural element.

Manufacturing the structural element may include attaching one or more coupling elements 52 to the solid structure. Such attaching may enable a relatively strong mechanical coupling to the structural element by means of the one or more coupling elements 52. The one or more coupling elements may be attached to the solid structure before making the fluidic material flow in the inner space 47 of the mould, or at least before making some of the fluidic material flow in the mould. The one or more coupling elements may e.g. be welded to the solid structure 50, or may be mechanically connected to the solid structure 50 in another way.

A coupling element 52 may enable a mechanical coupling to the structural element 14 by means of the coupling element. The coupling element 52 may include a tube provided with an internal thread, such as a screw sleeve. A connecting bolt or screw may be screwed into such a tube. The connecting bolt or screw may e.g. be provided with an eye that extends out of the structural element 14. Thus, the coupling element may be arranged for receiving a threaded connecting bolt or connecting screw, e.g. to connect to the pontoon an eye coupling that is attached to the connecting bolt or connecting screw. A rope or cable may be attached to such an eye coupling. The eye and the rope or cable may be used for lifting the pontoon or for restricting movement of the pontoon when it is floating.

Alternatively, the coupling element may be used to connect, by means of a connecting bolt or connecting screw, screwed into the coupling element, an interconnection element to the pontoon. The interconnection element may be used to connect the pontoon to another pontoon. Thus, using coupling elements of pontoons, pontoons can be mechanically interconnected by means of interconnection elements that are attached to two or more coupling elements 52. The coupling elements 52 can be used to connect to the pontoon's solid structure an interconnection element that can be used to mechanically connect the pontoon's solid structure to the solid structure of another pontoon.

A coupling element 52 may be contained inside an outer envelop of the structural element 14, so that it does not project out of the structural element 14. An example of such a coupling element is shown in figure 2C with reference number 52B. In a variation, the coupling element 52 may extend outside the structural element. An example of such a coupling element is shown in figure 2C with reference number 52A. The coupling element 52 may include an eye coupling. An outer surface of the coupling elements 52 may be provided with projections in order to improve attachment to surrounding solidified fluidic material.

Manufacturing the structural element may include attaching one or more float coupling elements 56 to the solid structure. The one ore more float coupling elements 56 may e.g. be threaded, and may be screwed into the float. The float coupling elements may broaden in a direction away from the float, enabling an improved attachment to the structural element. After attachment to the float, the one or more float coupling elements may be attached, e.g. glued or welded, to the solid structure 50.

The solid structure 50 and the float may be positioned in the mould 46, preferably attached to each other, before making at least part of the fluidic material flow into the mould. In the embodiment of figures 2A-2C, the solid structure 50 and the float may be positioned in the mould 46, preferably attached to each other, before making any of the fluidic material flow into the mould. This does not exclude that, in a variation, some fluidic material, of the same type or of another type, is already in the mould before positioning the solid structure in the mould and making also the remainder of the fluidic material flow into the mould 46.

It may thus be clear that, generally, manufacturing the pontoon may include manufacturing of the structural element 14. Manufacturing the pontoon and manufacturing the structural element may be carried out simultaneously. Method steps may be carried out for both manufacturing the structural element and for manufacturing the pontoon. Figure 2C shows, in a schematic cross section, the structural element after making the fluidic material 54, such as a concrete suspension, flow into the mould. The fluidic material 54 may flow above and besides the float 16 as a result of, for example, pouring the fluidic material into the mould. The solid structure 50 is, at least partly and preferably completely, surrounded by the fluidic material as a result of making the fluidic material into the mould 46.

Manufacturing includes solidification of the fluidic material that may be poured over and around at least part of the float. After solidification, the solidified fluidic material extends above and/or besides the cavity. As a result, the structural element includes the solidified fluidic material. As shown in figure 2C, the fluidic material may solidify above and besides the float, and around the float, to form the cavity. After solidification the poured material may form at least part of the structural element 14. Preferably, the pontoon is transported towards the water surface after solidification of the fluidic material.

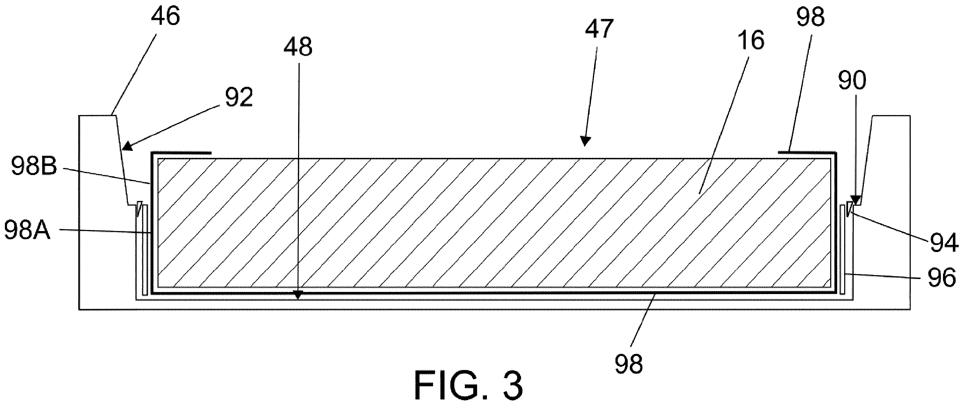

Figure 3 shows, in an embodiment of the invention, steps of a method of manufacturing a solar energy system that includes a pontoon. The embodiment of figure 3 is a variation of the embodiment of figures 2A-2C. The pontoon may be provided with at least one solar panel. By means of the pontoon, the solar energy system may be arranged to float on a water surface of e.g. a pond, lake, river, and/or sea. Figure 3 shows a mould 46 that is used for manufacturing the structural element of the pontoon. Manufacturing the pontoon may include making a fluidic material flow in an inner space 47 of the mould 46, for manufacturing the structural element. The mould may define a shape and/or one or more dimensions of the structural element, in particular of the cavity of the structural element.

The mould 46 may have a mould bottom 48 that defines a lower boundary of the inner space 47. The mould may be provided with a side plateau 90 that extends along an inner side 92 of the mould 46. The inner side 92 and the side plateau 90 may further define a boundary of the inner space 47 of the mould. During manufacturing the structural element, the side plateau may be substantially horizontal. The side plateau may e.g. define the lower surface 38 of the downwardly projecting lower part 24 of of the structural element 14 that is illustrated with reference to figure 1B. The side plateau may limit a downward flow of the fluidic material. As a result, the mould may be provided with openings at positions that are positioned lower than the side plateau. This enables a relatively light mould that can be displaced relatively easily.

In the embodiment illustrated with reference to figure 3, the method may include providing a float 16 that has a composition so that the float as such does float on said water surface. The float may be provided in the mould 46. As shown in figure 3, manufacturing the structural element may include positioning the float in the mould and surrounded by the mould. Before providing the float in the mould, the method may include providing a protective layer 98 in the mould. The protective layer may be provided on the bottom 48 of the mould 46 and on the inner side 92 of the mould 46, before providing the float 16 in the mould 46. Thus, the protective layer may cover the bottom 48 and inner side 92 of the mould, before positioning the float 16 in the mould 46. The protective layer 98 may extend out of the mould, before position the float in the mould 46.

The method may include wrapping the protective layer around at least part of the float 16, after providing the float in, or at least surrounded by, the mould 46. A lower part 98A of the protective layer may be positioned against the float 16 by the mould. An upper part 98B may be held in place, after wrapping the upper part around part of the float, by attaching the upper part of the protective against the float 16, e.g. by means of tape. Figure 3 shows an example of the cover layer wrapped around part of the float 16.

The mould 46 may include a plurality of wedges 94 and a plurality of filling pieces 96. By means of the wedge and the filling piece, a tight connection may be realised with the float or with the protective layer. Alternatively, the side plateau may be substantially continuous. The side plateau may be designed to snugly fit around the float 16, preferably around the float wrapped in the protective layer 98. The wedge and filling piece may be omitted. The mould be made e.g. out of wood and/or a metallic material such as steel. Preferably, a mould substantially made of a metallic material such as steel is used that snugly fits around the float and protective layer provided against at least part of the float.

After pouring the fluidic material in the mould, or otherwise make the fluidic material flow into the mould, for manufacturing the structural element, the side plateau 90 may substantially form a lower boundary for the fluidic material poured in the mould. An inner side part of the mould positioned higher than the side plateau 90 may be substantially sealed. At positions lower than the side plateau 90, there may be provided openings in the mould. Such openings may reduce a weight of the mould, while leakage of the fluidic material may be substantially prevented by the side plateau keeping the fluidic material higher than said openings.

In the embodiment illustrated with reference to figure 3, one or more steps described with reference to figures 2A-2C may be applied. Preferably, before making said fluidic material flow in the mould, a solid structure may be positioned in the mould. As a result of the flow the fluidic material, at least part of the solid structure may be surrounded by the fluidic material. Before providing said fluidic material in the mould, one or more coupling elements may be attached to the solid structure, for enabling a mechanical coupling to the structural element by means of the one or more coupling elements. Before providing said fluidic material in the mould, the float may be attached to the solid structure.

After positioning the protective layer in the float, positioning at least part of the float in and/or surrounded by the mould, and covering at least part of the float with the protective layer, providing the solid structure in the mould and attaching the solid structure to the float, the fluidic material may be provided in the mould. The solidified fluidic material may form at least part of the structural element. After providing the fluidic material in the mould, the wrapped protective layer may be fixed to the float after solidification of the fluidic material. Thus, the float of the pontoon can be provided with a protective layer for protection of the float. The float may, at least partly, be covered by the protective layer, such as an anti-rooting membrane. Other types of the protective layer 98 may also be used, in particular a protective layer that is substantially free of plastic. The protective layer may have a thickness of at least 0.05 millimeter and/or at most 5 millimeter, preferably about 0.1 millimeter or about 0.2 millimeter. Except for the anti-rooting membrane, the pontoon may be substantially free of plastic elements.

In an embodiment, the method may include releasing the pontoon from the mould by lifting the pontoon. The inner side part of the mould that is positioned higher than the side plateau 90, may be inclined so that a distance with the float increases when going in an upwards direction. This facilitates release of the pontoon from the mould by lifting the pontoon. Preferably, after lifting, the pontoon is placed or a truck or trailer for transporting the pontoon, e.g. towards the water surface. Preferably, a plurality of pontoons are stacked vertically on the truck or trailer.

Figures 2A-3 thus illustrate embodiments of manufacturing a pontoon for a floating solar energy system. It may be clear from figures 2A-3 that a shape and one or more dimensions of the cavity, such as a width of the cavity (which may be substantially equal to the width W_{f} of the float), may be defined by the float during the manufacturing of the structural element. The embodiments illustrated with reference to figures 2A-3 enable an efficient way of manufacturing, wherein the float and the structural element, and preferably also the solid structure and/or the protective layer, are included in the pontoon. The embodiments require movement and handling of the float for manufacturing the pontoon. The pontoon may however be manufactured without moving the structural element. As the float is usually light and relatively easy to move, said embodiments offer an advantageous way of manufacturing, in particular manufacturing in large quantities. More in general, as illustrated in the embodiments of figures 2A-3, the pontoon may be used in a similar orientation as wherein it is made (i.e., with at least part of the structural element positioned above the float or a part thereof). After manufacturing of the pontoon, the pontoon can be conveniently lifted, loaded to a truck or trailer, and transported. During lifting, preferably the mechanical lifting force is applied to the structural element, while the float is substantially free of mechanical loading.

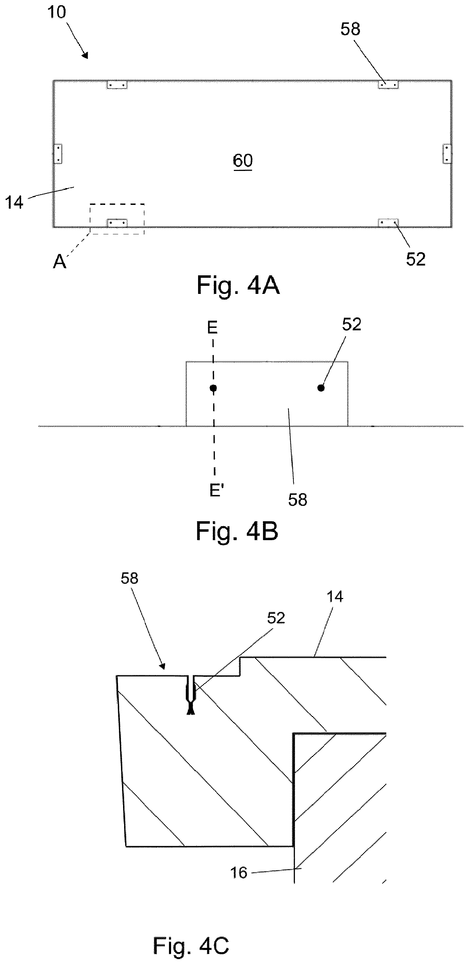

Figure 4A shows a schematic top view of a pontoon 10, in an embodiment of the invention. Figure 4B shows a detail of figure 4A. Figure 4C shows a cross section E-E' indicated in figure 4B. As illustrated in the embodiment of figures 4A-4C, the structural element 14 of the pontoon may include a plurality, e.g. twelve, coupling elements 52. The coupling elements may be positioned at a local recess 58 that may be provided on a top surface 60 of the pontoon. For example, a pair of coupling elements may be provided at a local recess 58. The top surface 60 of the pontoon may be formed by an upper surface of the structural element 14. The coupling elements 52 illustrated in figures 4A-4C may be used for providing eyes to the pontoon 10, in order to be able to lift the pontoon. The eyes may be fixed to threaded boults that are screwed into the coupling elements. At a later instance, the eyes and boults may be removed from the coupling elements, preferably leaving a substantially flat top surface 60. Of course, coupling elements 52 can be positioned on other positions on the pontoon and/or for other purposes as well.

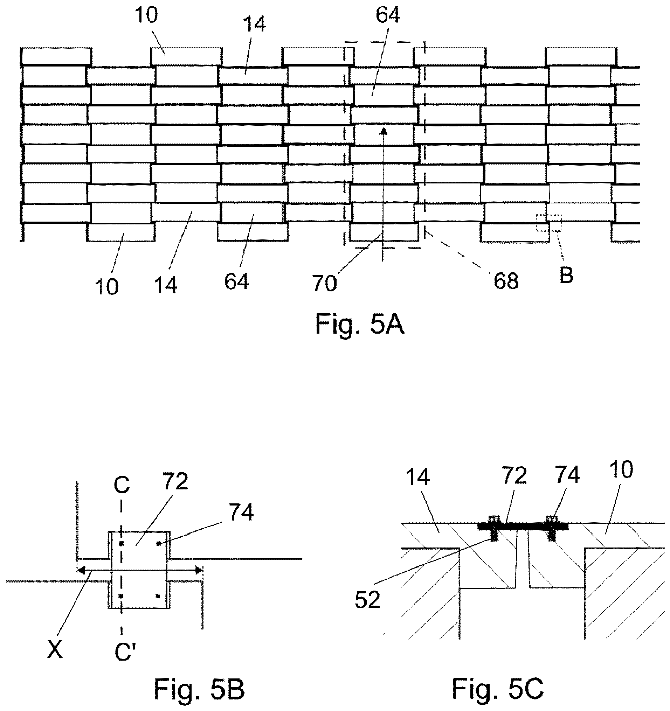

Figure 5A schematically shows a plurality of pontoons 10 of a solar energy system. The pontoons may be provided with a plurality of solar panels that are electrically connected. The solar energy system may be used for generating electrical energy from solar radiation by means of the electrically connected solar panels. The plurality of pontoons may have one or more features of the pontoon described with reference to figures 1A-4C. The plurality of pontoons 10 of the solar energy system may be mechanically interconnected, via one or more interconnection elements and optionally via one or more pontoons of said plurality of pontoons. The interconnected pontoons may leave open intermediate spaces 64 between adjacent pontoons along an array 68 of pontoons. Thus, adjacent pontoons of the solar energy system may be spaced apart in a direction 70 along an array 68 of pontoons 10 of the solar energy system.

Figure 5B shows a detail B of figure 5A, illustrating a mechanical connection between two pontoons. Figure 5C shows, in a cross section C-C' indicated in figure 5B, the mechanical connection between the two pontoons of figure 5B. The mechanical connection may include an interconnection element 72 and connecting bolts 74. The connecting bolts 74 may be screwed into, or otherwise connected to, the coupling elements 52. Thus, the interconnection element 72 may be coupled to one or more of the coupling elements that are included by the structural element 14. The coupling elements 72 may be used to connect, by means of a connecting bolt screwed into the coupling element, an interconnection element to the pontoon that can be used to connect the pontoon to another pontoon. Using coupling elements of pontoons, a plurality of pontoons of a solar energy system can be mechanically interconnected by means of interconnection elements.

In order to increase a strength of attachment of the coupling elements 52 in the structural element 14, the coupling elements may be mechanically attached to a solid structure provided in the structural element 14. The solid structure is not drawn in figures 4A-4C, but an example of a solid structure is drawn in figures 2B and 2C with reference number 50. The connecting bolts may e.g. be substantially made of stainless steel or another type of steel. The interconnection element 72 may be flexible. This may enable pontoons that are interconnected to move relative to each other. In this way, the solar energy system may be better suited to withstand waves on the water surface on which the solar energy system floats. The interconnection element 72 may e.g. be substantially made of a rubber material, such as a durable neoprene rubber.

Preferably, the pontoons of said plurality of pontoons are mechanically interconnected near a corner of the pontoons. A distance X of overlap of two pontoons interconnected by the interconnection element, may be in a range between 5 centimeter and 100 centimeter. Preferably, the distance X of overlap is at least 5 centimeter and/or at most 100 centimeter. More preferably, the distance X of overlap is at least 10 centimeter and/or at most 50 centimeter, e.g. about 20 centimeter.

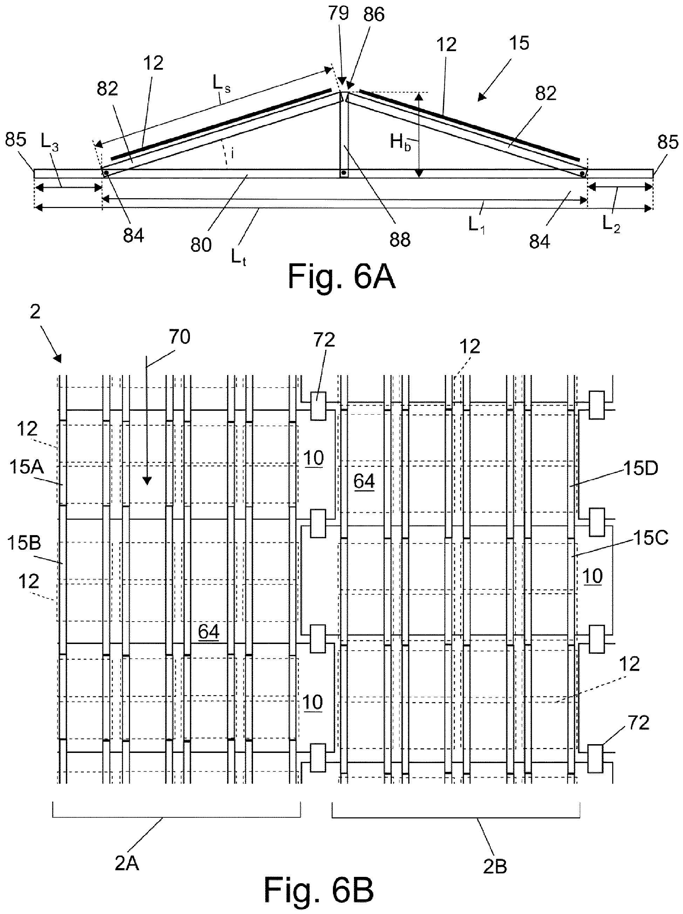

Figure 6A shows, in a schematic side view, an example of a frame element 15 to which two solar panels 12 are attached. The frame element 15 may be made from aluminium, or another material that is relatively light and durable. The frame element 15 can be used for positioning the solar panels 12 above at least part of a structural element of a pontoon. In use, the solar panel 12 may be supported by the frame element 15, preferably by a plurality of frame elements 15. A frame that comprises a plurality of frame elements 15 is normally used for positioning a plurality of solar panels 12. The frame elements 15, whether separate from each other or connected with each other, together may form the frame.

Preferably, a pair of solar panels 12 is attached to a pair of frame elements. The pair of solar panels may be positioned substantially in a V-shape, the V being upside down. A base 79 of the V-shape may be open. This enables the possibility of motion between the pair of solar panels, which may prevent mechanical stress in the solar panels. In addition, the opening in the base 79 of the V-shape may provide air to flow around the solar panels, thus enabling better cooling of the solar panels.

The frame element 15 may have a substantially triangular shape. The frame element may have a base part 80. The frame may have two inclined side parts 82 that extend from the base part 80. The side parts 82 may be connected to the base part 80 at connection points 84. The connection points 84 are spaced apart along the base part 80. The side parts 82 may extend from the connection points 84 upwards in an inclined upward directions towards each other. An angle of inclination i of the side parts may, in general, be at least 5 degrees and/or at most 30 degrees, preferably at least 10 degrees and/or at most 25 degrees, more preferably about 18 degrees.

The frame element 15 may be attached to a structural element of a pontoon, and/or to another frame element 15. The frame element 15 may be attached to the structural element, e.g. by means of one or more anchor bolts. The one or more anchor bolts may include stainless steel, and preferably are made substantially of stainless steel. The one or more anchor bolts may extend through an opening in the frame element and into a hole provided in the structural element, e.g. a bore hole. Preferably, a piece of flexible and/or elastic material, such as rubber, is provided in between the structural element and the frame element 15. The piece of material may allow for limited movement between the frame element 15 and the structural element 14 of the pontoon 10.

Preferably, a solar panel 12 is attached to the frame element 15 by means of at least one moveable, e.g. slidable, lock that allows movement of the at least one solar panel and the frame with respect to each other. The slidable lock may e.g. include a lip and a slot. The lip may extend from the side part 82. The lip may extend upwards from the side part 82 making an angle with the side part 82 that is smaller than 50 degrees, preferably smaller than 30 degrees. The lip may be received in the slot that extends into the solar panel. The lip may prevent downward motion of the solar panel along the side part 82, when the lip is received in the slot. The lip may be moveable through the slot, thus providing a moveable lock. Of course other projections than a lip and/or other openings than the slot can also be used.

The two side parts may be mechanically connected near a top part 86 of the frame element, e.g. by means of a support part 88 that is included by the frame element 15. The two side parts 82 may be mechanically connected to the support part 88. The support part 88 may be mechanically connected to the base part 80. The support part 88 of the frame element 15 may extend upwards from the base part 80. The support part 88 may extend substantially perpendicular from the base part 80.

The base part 80 of the frame element 15 may have a base length L₁. The base part may extend along a first extension length L₂ outwards beyond one of the connection points 84 of an inclined side part 82. At another side of the base part 80, the base part 80 may extend along a second extension length L₃ outwards beyond another one of the connections points 84 of an inclined side part 82. The first and second extension length may be different from each other or may, in a variation, be equal to each other. A total length Lt of the frame element 15 may equal the sum of the base length, the first extension length and the second extension length. The total length Lt of the frame element 15 may be measured between both frame element ends 85.

The base length L₁ may be at least 1.8 meter and/or at most 2.8 meter, preferably about 2.2 meter. The first extension length L₂ may be at least 0.1 meter and/or at most 0.4 meter, preferably about 0.2 meter. The second extension length L₃ may be at least 0.1 meter and/or at most 0.4 meter, preferably about 0.2 meter. A side length L_{S} of a side part 82, preferably of both side parts 82, may be at least 0.95 meter and/or at most 1.6 meter, preferably about 1.2 meter. A height H_{b} of the base part 88 may be at least 0.2 meter and/or at most 0.5 meter, preferably about 0.3 meter. Of course, other lengths are possible as well. Such dimensions may be chosen after experimentation and calculation, and enable a pontoon that is stable and enduring under challenging conditions such as relatively strong winds, deep and/or salt water, and intense UV-radiation from sunlight.

More in general, a plurality, e.g. at least two, three, or four, of different types of the frame element 15 may be included in the frame. One or both of the first extension length L₂ and the second extension length L₃ may be different between two frame elements that belong to different ones of the plurality of frame element types. Additionally, or alternatively, the base length L₁ of the base part 80 may be different between frame elements of different types. Thus, for a type of the frame elements, the base length L₁, the first extension length L₂, and/or the second extension length L₃ may differ from another type of the frame elements. Of each type, a plurality of frame elements may be included in the frame. The frame height H_{b} and/or the side part length Lₛ may also vary between different types of the frame elements.

In an embodiment, the structural element has a substantially rectangular shape in an, in use, horizontal cross section. Such a rectangular shape is illustrated in figures 1A, 4A, 5A, and 6B. The rectangular shape may enable an efficient configuration of a solar energy system than includes a plurality of pontoons. Other shapes may also enable an efficient configuration. In use, the solar panels 12 may be oriented to face a substantially eastern direction or a substantially western direction. Thus, a bottom of the V-shape of a pair of solar panels may extend along substantially the north-south direction. A deviation from the north-south direction preferably is within 30 degrees.

Figure 6B shows a schematic top view of a part of a solar energy system 2, in an embodiment of the invention. The solar energy system 2 includes a plurality of pontoons 10 and a plurality of solar panels 12. The solar panels may, at least partly, be positioned above at least part of the structural elements of the pontoons. Additionally, or alternatively, the solar panels 12 may, at least partly, be positioned above at least part of the intermediate spaces 64 between the pontoons 10. Generally, the solar panels 12 and the frame elements 15 may be provided to a pontoon while the pontoons are floating on the water surface.

The pontoons 10 may be mechanically connected, i.a. by means of interconnection elements 72. Also, frame elements may connect pontoons to each other. Preferably, a pair of solar panels is attached to a pair of frame elements. The frame elements of said pair may be positioned substantially parallel to each other. The frame elements 15 illustrated in figure 6B are of different types, having a different total lengths Lt, base length L₁, first extension length L₂, and/or second extension length L₃. In order to illustrate the use of different combinations of frame element types, the embodiment of the solar energy system 2 shown in figure 6B includes two solar energy system parts 2A, 2B. In other embodiments, the solar energy system 2 may e.g. only comprise frame element types as shown in part 2A, or only comprise frame element types as shown in part 2B.

In the first solar energy system part 2A, two types 15A, 15B of the frame elements may be used. A first type of the frame element 15A may have a base length that is smaller than a base length of a second type of the frame element 15B. The first frame element type 15A may have a base length that is smaller than a width Wₛ (illustrated e.g. with reference to figure 1B) of the structural element of the pontoon 10 at an upper surface 36 of the structural element of the pontoon 10. Thus, the first frame element type 15A may be attached to the pontoon to not extend beyond the pontoon 10. The second frame element type 15B has a base length that is larger than said width Wₛ of the structural element of the pontoon 10. The second frame element type 15B may be attached to two different pontoons. The second frame element type 15B may, in use, span an intermediate space 64 between adjacent pontoons along an array of pontoons.

In the second solar energy system part 2B, two further types 15C, 15D of the frame elements may be used. A third type of the frame element 15C may have a base length that is smaller than a fourth type of the frame element 15D. The third frame element type 15C may have a base length that is similar or substantially equal (i.e., with a difference smaller than 5 % of the base length) to the width Wₛ of the structural element of the pontoon 10. Thus, the third frame element type 15C may be attached to the pontoon to not extend beyond the pontoon 10, or to only extend beyond the pontoon 10 by only one of the first and second extension lengths L₂, L₃. The fourth frame element type 15D may, in use, span a majority of an intermediate space 64 between adjacent pontoons in a direction 70 along an array of pontoons. The fourth frame element type 15D may, in use, not completely span an intermediate space 64 between adjacent pontoons in a direction 70 along an array of pontoons.

In the first solar energy system part 2A, the frame elements of the first type 15A and frame elements of the second type 15B may be positioned alternatedly, in a direction along the base part of the frame elements 15. Thus, a first frame element type 15A may be positioned with both of its extensions, or frame element ends 85, near, and optionally connected to, a second frame element type 15B. In the second solar energy system part 2B, the frame elements of the third type 15C and frame elements of the fourth type 15D may also be positioned alternatedly, in a direction along the base part of the frame elements 15. Thus, a third frame element type 15C may be positioned with with both of its extensions, or frame element ends 85, near, and optionally connected to, a fourth frame element type 15D.

Thus, more in general, an array of frame elements 15 may mechanically connect a plurality of pontoons 10 and span open intermediate spaces 64 between adjacent pontoons along an array of pontoons. Preferably, at least three, more preferably at least four, different types of frame element are used in a solar system. Such different type of frame elements may have a different total length Lt. Preferably, such different type of frame elements may have similar, e.g. substantially equal, base length L₁. Thus, the frame of the solar energy system may include at least three, preferably at least four, different types of frame element having a different total length Lt and preferably a similar base length L₁. The different total lengths Lt may provide the possibility to optimise an areal coverage of solar panels. The similar base lengths L₁ may enable standardisation of a size of the solar panels, which can be beneficial e.g. in large solar energy systems containing relatively large amounts of solar panels.

It may be clear from figures 4A and 6B that, more in general, in a vertical projection a total surface area occupied by the plurality of solar panels may be larger than a total surface area of the top surfaces of the pontoons. Preferably, dimensions of the pontoons, the frame elements and the solar panels are dimensioned so that, in a vertical projection, the total surface area occupied by the plurality of solar panels is at least 1.4 times, preferably at least 1.6 times, more preferably at least 1.8 times a total surface area of the top surfaces of the pontoons.

As illustrated in figure 6B, the solar energy system may include a plurality of pontoons 10 and a plurality of solar panels 12. In a solar energy system 2 that includes a plurality of pontoons 10, a plurality of solar panels 12 may be positioned above an intermediate space 64 between pontoons. In such a solar energy system, some of the solar panels 12 may be positioned above said intermediate space 64 and not above a pontoon 10. More in general, a first plurality of solar panels 12 may be provided above a pontoon 10 and not above an intermediate space 64, a second plurality of solar panels may be provided above an intermediate space 64 and not above a pontoon 10, and/or a third plurality of solar panels may be provided above an intermediate space 64 and above a pontoon 10.

The use of expressions like "preferably", "more preferably", "in particular", "e.g.", "for example", "such as", "may", "can", "aspect", "embodiment", "variation", "type" etc. is not intended to limit the invention. For example, the term "pontoon" is not limited to the embodiments disclosed herein, but may have other shapes and/or dimensions, and/or may include other materials, than the ones disclosed. The use of terms like "a", "an", or "the" does not exclude a plurality. Terms like "flow", "flows", "flowed" etc. used herein may also be interpreted broadly, and may e.g. include various kinds of displacement of the fluidic material relative to the float, including flow as a result of pouring and flow as a result of vibrations or other relatively small displacements. The flow may be caused by driving the fluidic material towards and/or along the float, and/or by movement of the float relative to the fluidic material. Features disclosed in relation to one or more of the embodiments described herein, may be applied in other embodiments as well. The invention is not limited to an aspect, embodiment, feature, or example of the present disclosure. All kinematic inversions are considered to be inherently disclosed and to be within the scope of the present disclosure.

## Claims

1. Pontoon arranged to be included by a solar energy system that is provided with at least one solar panel and is arranged to float on a water surface by means of at least the pontoon, wherein the pontoon includes a structural element and a float, the structural element having a composition so that the structural element as such does not float on said water surface and the float having a composition so that the float as such does float on said water surface, wherein the structural element is provided with a cavity wherein at least part of the float is provided, wherein the structural element includes a solidified material that originates from a fluidic material that flowed above and/or besides the float so that the solidified material extends above and/or besides the cavity.

2. Pontoon according to claim 1, wherein the structural element includes an, in use, sidewardly extending upper part and an, in use, downwardly projecting lower part that projects downwards from the upper part, wherein the sidewardly extending upper part and the downwardly projecting lower part define the cavity.

3. Pontoon according to claim 2, wherein the composition and a volume of the structural element and of the float are designed so that, in use and while the water surface is substantially free of waves, the downwardly projecting lower part is at least partly below the water surface.

4. Pontoon according to one of claims 1-3, wherein the composition and dimensions, of the structural element and of the float, are designed so that, in use and while the water surface is substantially free of waves, a center of gravity of the pontoon and/or the solar energy system is above the water surface, and/or is at most 20% of a lateral dimension of the float above the water surface.

5. Pontoon according to one of claims 1-4, wherein the composition and dimensions, of the structural element and of the float, are designed so that, in use, a natural oscillation time of the pontoon and/or the solar energy system is at least 10 seconds.

6. Pontoon according to one of claims 1-5, wherein the solidified material is formed at least partly of concrete so that the structural element includes at least 70 wt. % concrete, and/or the float includes at least 70 wt. % expanded polystyrene.

7. Pontoon according to one of claims 1-6, wherein the solidified material includes parts of recycled solar panels.

8. Pontoon according to one of claims 1-7, wherein the float is, at least partly, covered by a protective layer, such as an anti-rooting membrane.

9. Pontoon according to one of claims 1-8 included by the solar energy system, including a frame that is attached to the structural element, the frame being arranged for attaching the at least one solar panel to the frame, wherein the at least one solar panel is attached to the frame by means of at least one moveable, e.g. slidable, lock that allows movement of the at least one solar panel and the frame with respect to each other.

10. Use of a pontoon according to one of claims 1-9 in a floating solar energy system, the pontoon being one of a plurality of pontoons included by the solar energy system, wherein pontoons of the plurality of pontoons are mechanically interconnected.

11. Method of manufacturing a pontoon that is arranged to be included by a solar energy system that is provided with at least one solar panel and is arranged to float on a water surface by means of at least the pontoon, the method including:
- manufacturing of a structural element of the pontoon that has a composition so that the structural element as such does not float on said water surface;
- providing a float of the pontoon that has a composition so that the float as such does float on said water surface; and
- providing the float at least partly in a cavity that is provided in the structural element;
wherein manufacturing the structural element includes making a fluidic material flow above and/or besides the float and includes solidification of the fluidic material, so that at least part of the solidified material extends above and/or besides the cavity.

12. Method according to claim 11, including:
- positioning at least part of the float in and/or surrounded by a mould; and
- making the fluidic material flow into the mould so that the material flows above and/or besides the float, the mould defining a shape and/or one or more dimensions of the structural element.

13. Method according to claim 11 or 12, including:
- positioning a solid structure in the mould, wherein the solid structure is, at least partly, surrounded by the fluidic material as a result of the flow of the fluidic material into the mould.

14. Method according to claim 13, including:
- before making at least part of the fluidic material flow into the mould, attaching one or more coupling elements to the solid structure, for enabling a mechanical coupling to the structural element by means of the one or more coupling elements.

15. Method according to one of claims 11-14, including:
- before making at least part of the fluidic material flow into the mould, attaching the float to the solid structure.
